(19) Europäisches Patentamt
European Patent Office
Office européen des brevets

(11) **EP 4 094 934 A1**

(12) **EUROPEAN PATENT APPLICATION**
published in accordance with Art. 153(4) EPC

(43) Date of publication:
**30.11.2022 Bulletin 2022/48**

(21) Application number: **21744995.8**

(22) Date of filing: **05.01.2021**

(51) International Patent Classification (IPC):
**B32B 3/30** (2006.01)    **B32B 27/00** (2006.01)
**B32B 33/00** (2006.01)    **E04F 13/08** (2006.01)

(52) Cooperative Patent Classification (CPC):
**B32B 3/30; B32B 27/00; B32B 33/00; E04F 13/08;**
Y02A 30/00

(86) International application number:
**PCT/JP2021/000124**

(87) International publication number:
**WO 2021/149480 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2020 JP 2020008155**
**03.03.2020 JP 2020035563**

(71) Applicant: **TOPPAN INC.**
**Tokyo 110-0016 (JP)**

(72) Inventors:
• **OSHIMA, Nonoka**
**Tokyo 110-0016 (JP)**
• **HARIMA, Hajime**
**Tokyo 110-0016 (JP)**

(74) Representative: **Hoffmann Eitle**
**Patent- und Rechtsanwälte PartmbB
Arabellastraße 30
81925 München (DE)**

(54) **DECORATIVE SHEET, DECORATIVE PLATE, AND METHOD FOR PRODUCING DECORATIVE SHEET**

(57)    To obtain a decorative sheet having excellent fingerprint resistance of the decorative sheet surface, a decorative plate, and a method for producing a decorative sheet. A decorative sheet includes: a primary film layer; a colored pattern layer provided on one surface of the primary film layer; and a first surface protective layer provided on the surface on the side opposite to the primary film layer of the colored pattern layer, having a core part and ridge-like parts provided to project in a ridge-like shape from one surface of the core part, and having an irregular shape formed on the surface. The first surface protective layer of the decorative sheet is formed by irradiating a surface of an applied ionizing radiation curable resin with a first ionizing radiation having energy capable of cleaving a polymer chain of the ionizing radiation curable resin, to shrink the surface of the ionizing radiation curable resin, and form an irregular shape on the surface of the ionizing radiation curable resin, and irradiating the shrunk ionizing radiation curable resin with a second ionizing radiation curing the ionizing radiation curable resin to cure the ionizing radiation curable resin.

FIG. 1

**Description**

Technical Field

The present disclosure relates to a decorative sheet, a decorative plate, and a method for producing a decorative sheet.

Background Art

Conventionally, in the decorative sheet, a matte feeling of the decorative sheet surface has been adjusted by adding a gloss adjuster (matting additive) to a surface protective layer of the decorative sheet from the viewpoint of design properties or the like (see PTL 1, for example).

Citation List

Patent Literature

PTL 1: JP 2001-129959 A

Summary of Invention

Technical Problem

However, the gloss adjuster reduces the oil repellency of a layer formed of a resin material. Therefore, the decorative sheet having the surface protective layer containing the gloss adjuster has had a problem that fingerprints are easily attached.
The present disclosure has been made in view of such a problem. It is an object of the present disclosure to obtain a decorative sheet having excellent fingerprint resistance of the decorative sheet surface, a decorative plate, and a method for producing a decorative sheet.

Solution to Problem

In order to solve the above-described problem, a decorative sheet according to one aspect of the present disclosure includes: a primary film layer; a colored pattern layer provided on one surface of the primary film layer; and a first surface protective layer provided on the surface on the side opposite to the primary film layer of the colored pattern layer, having a core part and ridge-like parts provided to project in a ridge-like shape from one surface of the core part, and having an irregular shape formed on the surface.
A decorative plate according to another aspect of the present disclosure includes: the above-described decorative sheet and a substrate provided on the surface on the side opposite to the colored pattern layer of the primary film layer.
A method for producing a decorative sheet according to another aspect of the present disclosure includes: irradiating the surface of an applied ionizing radiation curable resin with a first ionizing radiation having energy capable of cleaving a polymer chain of the ionizing radiation curable resin, to shrink the surface of the ionizing radiation curable resin, and form an irregular shape on the surface of the ionizing radiation curable resin; and irradiating the shrunk ionizing radiation curable resin with a second ionizing radiation curing the ionizing radiation curable resin, to cure the ionizing radiation curable resin, and form a first surface protective layer having a core part and ridge-like parts provided to project in a ridge-like shape from one surface of the core part.

Advantageous Effects of Invention

The aspects of the present disclosure can provide a decorative sheet capable of achieving both a matte feeling and fingerprint resistance of the decorative sheet surface, a decorative plate, and a method for producing a decorative sheet.

Brief Description of Drawings

FIG. 1 is a cross-sectional view illustrating one configuration example of a decorative sheet according to a first embodiment of the present disclosure;

FIG. 2 is a plane photograph illustrating one configuration example of the surface of a first surface protective layer of the decorative sheet according to the first embodiment of the present disclosure;

FIG. 3 is a cross-sectional photograph illustrating one configuration example of the first surface protective layer of the decorative sheet according to the first embodiment of the present disclosure;

FIG. 4 is an enlarged cross-sectional view illustrating one configuration example of the decorative sheet according to the first embodiment of the present disclosure;

FIG. 5 is an enlarged cross-sectional view illustrating the surface shape of a surface protective layer when an irregular shape is formed on the surface of the surface protective layer by mechanical processing, such as embossing;

FIG. 6 is a cross-sectional view illustrating a modification of the decorative sheet according to the first embodiment of the present disclosure;

FIG. 7 is a cross-sectional view illustrating a modification of the decorative sheet according to the first embodiment of the present disclosure;

FIG. 8 is a cross-sectional view illustrating a modification of the decorative sheet according to the first embodiment of the present disclosure;

FIG. 9 is a cross-sectional view illustrating one configuration example of a decorative sheet according to a second embodiment of the present disclosure; and

FIG. 10 is a cross-sectional view illustrating one configuration example of a decorative sheet according to a third embodiment of the present disclosure.

Description of Embodiments

Hereinafter, the present disclosure will be described through embodiments but the following embodiments do not limit the invention according to each claim. All combinations of features described in the embodiments are not necessarily essential to the solution of the invention. The drawings schematically illustrate the invention according to each claim, and the dimensions, such as the width and the thickness, of each part are different from the actual dimensions, and ratios thereof are also different from the actual ratios.

A decorative sheet of the present disclosure is described. The decorative sheet according to the present disclosure is a decorative sheet laid on wall surfaces, fittings, furniture, and the like, for example. In the following description, the side in contact with a foundation of the decorative sheet is sometimes referred to as "bottom" and the side (surface) opposite to the side in contact with the foundation of the decorative sheet is sometimes referred to as "top".

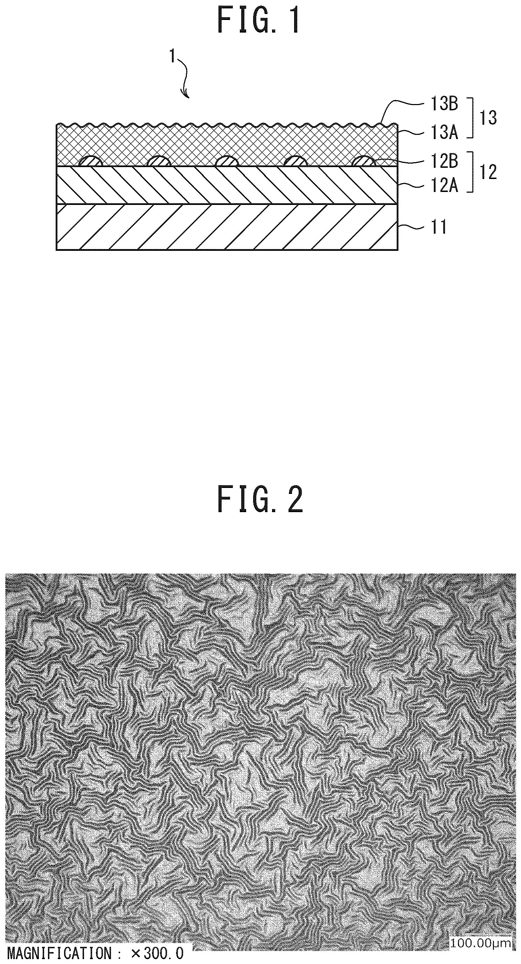

Hereinafter, aspects of the embodiments of the present disclosure are described with reference to FIG. 1 to FIG. 8.

1. First embodiment

(1. 1) Basic configuration of decorative sheet

The basic configuration of a decorative sheet according to a first embodiment of the present disclosure is described with reference to FIG. 1. FIG. 1 is a cross-sectional view for explaining one configuration example of a decorative sheet 1 according to the embodiment of the present disclosure. As illustrated in FIG. 1, the decorative sheet 1 includes a primary film layer 11, a colored pattern layer 12, and a first surface protective layer 13. The decorative sheet 1 is constituted by depositing the primary film layer 11, the colored pattern layer 12, and the first surface protective layer 13 in this order.

The primary film layer 11 is a layer serving as a substrate of the decorative sheet 1 and absorbs irregularities, steps, or the like of a sticking surface to improve the construction finish of the decorative sheet 1 and conceal a color and a pattern of the sticking surface. The colored pattern layer 12 is a layer imparting at least one of a hue and a pattern to the decorative sheet 1. The first surface protective layer 13 is a layer for protecting the primary film layer 11 and the colored pattern layer 12 from flaws or the like.

Hereinafter, each layer of the primary film layer 11, the colored pattern layer 12, and the first surface protective layer 13 is described in detail.

<Primary film layer >

The primary film layer 11 is a layer (sheet) serving as a substrate of the decorative sheet 1.

The primary film layer 11 is a resin layer or a resin sheet formed of a paper material mainly containing pulp or cellulose fibers, or a resin material, for example.

When the primary film layer 11 is the paper material, a paper strengthening agent, additives for improving concealment, cellulose nanofibers, or additives, such as a colorant, may be added.

When the primary film layer 11 is the resin material, a thermoplastic resin represented by polypropylene, polyethylene, polyester, or the like, is preferably used as the resin material. The thermoplastic resin may contain an inorganic material, such as titanium oxide or calcium carbonate, as additives. The use of at least one of polypropylene, polyethylene, and polyester as the thermoplastic resin improves the dispersibility of the inorganic material. The use of polypropylene as the thermoplastic resin further improves the dispersibility of the inorganic material.

When the primary film layer 11 is a resin film, the resin film is preferably a film material mainly containing polyethylene terephthalate. The resin film may contain the above-described inorganic material as an additive. When the primary film layer 11 is the resin film, the primary film layer 11 may be a uniaxially or biaxially oriented resin film. The primary film layer 11 formed of the uniaxially or biaxially oriented resin film may contain pores inside.

When the primary film layer 11 is the resin material or the resin film, the content of the inorganic material with respect to the primary film layer 11 is preferably set within the range of 1% by mass or more and 90% by mass or less, more preferably set within the range of 5% by mass or more and 80% by mass or less, and still more preferably set within the range of 20% by mass or more and 80% by mass or less. By setting the content of the inorganic material within the ranges above, printability or lamination suitability can be certainly improved and cracking occurring in a bent portion of the sheet can be certainly reduced while certainly obtaining sufficient nonflammability or sufficient flame retardancy.

The thickness of the primary film layer 11 is preferably within the range of 20 $\mu$m or more and 250 $\mu$m or less, more preferably within the range of 25 $\mu$m or more and 250 $\mu$m or less, and still more preferably within the range of 70 $\mu$m or more and 200 $\mu$m or less. When the thickness of the primary film layer 11 is within the ranges above, the lamination suitability can be improved and cracking occurring in a bent portion of the sheet can be reduced.

The surface of the primary film layer 11 may be subjected to surface treatment, such as corona treatment or plasma treatment, for example. This improves adhesiveness (adhesion) between the primary film layer 11 and the colored pattern layer 12.

<Colored pattern layer>

The colored pattern layer 12 is provided on one surface of the primary film layer 11. The colored pattern layer 12 has a colored layer 12A provided on the primary film layer 11 and a pattern layer 12B provided on the colored layer 12A, for example. The colored pattern layer 12 may have at least either the colored layer 12A or the pattern layer 12B according to desired design properties.

The colored layer 12A is a layer for imparting design properties by a desired hue to the decorative sheet 1 and concealing the color/pattern of a foundation material to which the decorative sheet 1 is stuck. The colored layer 12A is formed by solid printing or the like of ink, for example.

The pattern layer 12B is provided closer to the surface side of the decorative sheet 1 than the colored layer 12A, and is a layer for imparting design properties by a desired pattern to the decorative sheet 1. The pattern layer 12B is formed on the upper surface of the colored layer 12A, and has patterns, such as a wood grain pattern, a stone grain pattern, a sand grain pattern, a tiled pattern, a brickwork pattern, a cloth grain pattern, a leather tie-died pattern, and a geometric figure, formed by printing, for example.

The colored layer 12A and the pattern layer 12B are formed by screen printing using ink, for example. As the ink for forming the colored layer 12A and the pattern layer 12B, isoindolinone yellow, polyazo red, phthalocyanine blue, carbon black, iron oxide, and titanium oxide can be used alone or as a mixture thereof as a pigment, for example. The inks may be aqueous solvents or organic solvents. As the organic solvents, ethyl acetate, n-butyl acetate, isobutanol, methyl isobutyl ketone, and the like are usable, for example.

The thickness of the colored layer 12A and the pattern layer 12B of the colored pattern layer 12 may be such that desired design properties are sufficiently developed. The thickness of the colored layer 12A is preferably within the range of 2 $\mu$m or more and 20 $\mu$m or less, for example. By setting the thickness of the colored layer 12A within the range above, sufficient concealment can be developed for colors and stains of the primary film layer 11 even when the colored layer 12A is colored white or light color, for example, and sufficient durability can be obtained by preventing a reduction in the adhesion strength between ink layers constituting the colored layer 12A. The thickness of the pattern layer 12B is preferably set in the range of 0.1 $\mu$m or more and 10 $\mu$m or less, for example. Herein, the "thickness of the pattern layer 12B" refers to the thickness of a part where ink is printed. The pattern layer 12B may not be provided on the entire surface of the colored layer 12A, and the colored layer 12A may be exposed from the pattern layer 12B. By setting the thickness of the pattern layer 12B within the range above, the pattern is clearly expressed or gradation is added to the pattern, so that design properties can be enhanced and, by printing a plurality of colors in an overlapping manner, so that an upper layer color and a lower layer color are overlapped on each other, the expressible hue range can be increased with limited colors.

<First surface protective layer>

The first surface protective layer 13 is provided on the surface on the side opposite to the primary film layer 11 of the colored pattern layer 12. The first surface protective layer 13 includes a core part 13A, which is a region of a lower layer (back surface side) in the layer, and ridge-like parts 13B, which are regions of an upper layer (front surface side) in the layer. The first surface protective layer 13 has the core part 13A and the ridge-like parts 13B provided to project in a ridge-like shape from one surface of the core part 13A. Thus, an irregular shape is formed on the surface of the first surface protective layer 13.

Herein, in the decorative sheet 1 according to this embodiment, the "ridge-like" refers to a shape which is elongated and raised and in which the elongated and raised parts are linearly connected in a plan view. The ridge-like parts 13B may be curved or linear in a plan view, but is preferably curved from the viewpoint of fingerprint resistance on the surface of the decorative sheet 1. In the present disclosure, the ridge-like part 13B is, for example, a part from the lowest part to the tip of the irregular shape provided on the surface of the first surface protective layer 13, and the core part 13A refers to a part excluding the ridge-like parts 13B of the first surface protective layer 13.

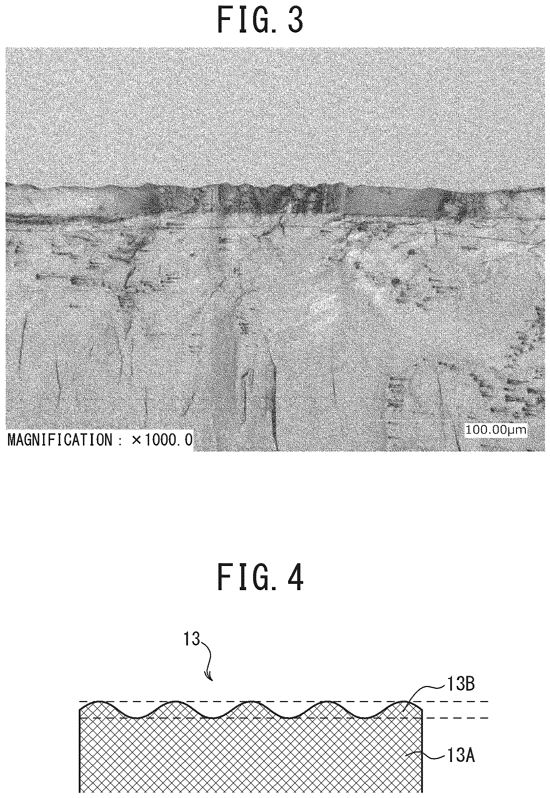

FIG. 2 is plane photograph illustrating the configuration of the surface (upper surface) of the first surface protective layer 13. FIG. 3 is cross-sectional photograph illustrating the configuration of the surface (upper surface) of the first surface protective layer 13. FIG. 4 is cross-sectional view schematically illustrating the configuration of the surface (upper surface) of the first surface protective layer 13. FIG. 3 and FIG. 4 are a cross-sectional photograph and a cross-sectional view, respectively, illustrating the cross section in the width direction of the ridge-like parts 13B. Herein, FIG. 2 and FIG. 3 are a plane photograph and a cross-sectional photograph, respectively, obtained by an optical microscope (digital microscope, VHX-6000 manufactured by KEYENCE CORPORATION).

As illustrated in the plane photograph and the cross-sectional photograph of FIG. 2 and FIG. 3, respectively, the ridge-like parts 13B have a shape which is elongated and raised and in which the elongated and raised parts are linearly connected in a plan view. The ridge-like parts 13B are formed by irradiating the surface of an ionizing radiation curable resin with an ionizing radiation of a specific wavelength, and shrinking the surface of the ionizing radiation curable resin as described later. The ridge-like parts 13B formed by the shrinkage of the ionizing radiation curable resin have a composition different from that of the core part 13A which is not shrunk. Specifically, the ridge-like parts 13B formed by the shrinkage of the ionizing radiation curable resin have a composition in which the ratio of a carbonyl bond ($C=O$) or a carbon-carbon bond (double bond ($C=C$), triple bond ($C\equiv C$) between carbon and carbon) contained in the resin is lower than that of the core part 13A present in a deep layer. For example, the ratio of the carbonyl bond and the carbon-carbon bond contained in the resin in the ridge-like parts 13B is preferably lowered by 10% or more and more preferably by 20% or more than that of the core part 13A present in the deep layer. This is because the irradiation of the ionizing radiation curable resin with a high-energy ionizing radiation cleaves a polymer chain (carbonyl bond or carbon-carbon bond (double bond, triple bond) contained in the resin. In the ionizing radiation curable resin irradiated with the high-energy ionizing radiation, a new bond (recombination, re-crosslinking) occurs in a part where the bond is cleaved, and the surface of the ionizing radiation curable resin is shrunk, so that the ridge-like parts 13B are formed. Such a difference in the composition between the core part 13A and the ridge-like parts 13B is a feature when irregularities are formed on the surface of the first surface protective layer 13 by the irradiation with the ionizing radiation.

The irradiation of the ionizing radiation curable resin with the high-energy ionizing radiation causes the recombination and the re-crosslinking in a state where the polymer chain contained in the resin is cleaved and hydrogen atoms are extracted. Therefore, the ridge-like parts 13B formed by the cleavage and the recombination and re-crosslinking of the polymer chain have a configuration in which the crosslinking density is higher than that of the core part 13A present in the deep layer. Therefore, the porosity in the resin constituting the ridge-like parts 13B, which is the surface portion of the first surface protective layer 13 serving as the outermost layer of the decorative sheet 1, decreases and the surface hardness of the first surface protective layer 13 increases, so that the flaw resistance of the decorative sheet 1 is improved.

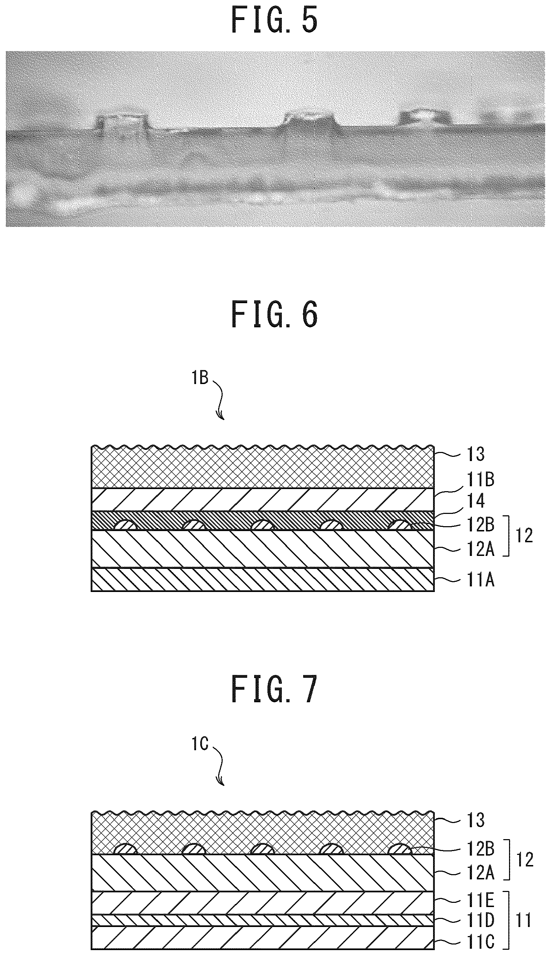

As illustrated in FIG. 4, the surface of such ridge-like parts 13B have a curved shape in a cross-sectional view. The ridge-like parts 13B are shrunk due to the ablation of the ionizing radiation curable resin irradiated with the ionizing radiation of a specific wavelength. More specifically, due to the irradiation of the surface of the ionizing radiation curable resin with a strong laser light, the ionizing radiation curable resin on the locally heated surface evaporates, and atoms, molecules, plasmas, and clusters thereof are scattered, so that the ridge-like parts 13B are formed. The ridge-like parts 13B having a curved shape in a cross-sectional view as described above are clearly different in the shape from the irregular shape (see FIG. 5) formed by mechanical processing, such as embossing, on the surface of the surface protective layer.

Therefore, the ridge-like parts 13B having a smooth shape are formed due to surface tension on the surface of the ionizing radiation curable resin. Specifically, radicals of the ionizing radiation described above directly cleave the carbonyl bond, or the double bond or the triple bond between carbon and carbon of the resin constituting the first surface protective layer 13. Further, ozone, oxygen radicals, and the like are generated from oxygen molecules by the irradiation with a high energy ionizing radiation, such as vacuum ultra violet, and the radicals thus generated sometimes cleave the carbonyl bond, or the double bond or the triple bond between carbon and carbon. In this case, ozone, oxygen radicals, and the like are generated from oxygen molecules having a concentration limited to 2000 ppm, preferably 1000 ppm or less, and more preferably 400 ppm or less, for example, in a vacuum atmosphere environment. The recombination of the cleaved bond with adjacent atoms, such as carbon, oxygen, and nitrogen, or radicals present in the atmosphere causes the shrinkage of the surface of the ionizing radiation curable resin, so that a gentle curved shape is formed. Such a gentle shape of the ridge-like parts 13B is also a feature when irregularities are formed on the surface of the first surface protective layer 13 by the irradiation with the ionizing radiation.

The height of such ridge-like parts 13B is preferably 15 μm or less and more preferably 8 μm or less, for example. A pitch p between the adjacent ridge-like parts 13B (for example, interval between the tops of the ridge-like parts 13B) p is preferably 50 μm or less, more preferably 10 μm or less, and still more preferably 6.5 μm or less. The ridge-like parts 13B formed by irradiating the ionizing radiation curable resin with the high-energy ionizing radiation have a finer structure as compared with the irregular shape formed by the mechanical processing, such as embossing, on the surface of the surface protective layer. By the formation of such a fine irregular shape on the surface of the first surface protective layer 13, the fingerprint resistance can be improved while maintaining the matte feeling on the surface of the decorative sheet 1.

Hereinafter, the mechanism by which the ridge-like parts 13B are formed by a first ionizing radiation irradiation is described in more detail.

The vacuum ultra violet (VUV) can cleave, using photon energy, bond energy smaller than the photon energy. Therefore, by the irradiation of the surface of the ionizing radiation curable resin with the vacuum ultra violet, a molecular bond of organic matter in the ionizing radiation curable resin is cleaved and the bonding state of a polymer on the surface of the ionizing radiation curable resin is changed, so that the surface is modified (shrunk).

By combining rare gas, halogen gas, mercury, and the like as the medium of the first ionizing radiation, a light source close to monochromatic light can be obtained at wavelength intervals of 20 nm to 30 nm in the range where the wavelength is 100 nm or more and 500 nm or less. As the first ionizing radiation used to form the ridge-like parts 13B, any one of the light sources may be used. However, considering a difference between the size, wavelength, of the obtained photon energy and the bond energy of the organic matter, it is the most preferable to use a xenon lamp emitting excimer laser with a center wavelength of 172 nm as the light source. The first ionizing radiation having a lower wavelength and stronger energy is preferable because the first ionizing radiation having a lower wavelength and stronger energy is more likely to cleave the molecular bond of the organic matter and cause surface shrinkage. On the other hand, it is the most preferable to use a xenon lamp as the light source considering the cost for maintaining equipment, the availability of materials, and the like together.

Herein, lights with a wavelength of 380 nm or less are referred to as an ultraviolet (UV). Among the lights, lights with a wavelength of 200 nm or less are referred to as the vacuum ultra violet (VUV), and the lights are absorbed by oxygen in the air and attenuated. Therefore, the removal of oxygen in the first ionizing radiation irradiation environment can further enhance the surface modification effect of the ionizing radiation curable resin. It is preferable to control the reaction atmosphere by introducing a required reaction gas (for example, nitrogen gas), use a chamber system capable of reducing the oxygen concentration to 2000 ppm or less, or irradiate the ionizing radiation curable resin with ultraviolet rays (particularly, light of 250 nm or less). The light energy cleaves the molecular bond of an organic substance in the ionizing radiation curable resin and causes the extraction of hydrogen atoms, so that the molecular composition is likely to change, and the surface modification (shrinkage) of the ionizing radiation curable resin is likely to occur.

To prevent the attachment of stains, such as hand oil and fingerprints, to the resin surface, it is necessary to impart oil repellency. To that end, the ionizing radiation is emitted while reducing the oxygen concentration in the ionizing radiation irradiation atmosphere as low as possible (ideally under the condition of 400 ppm or less), so that the performance of the decorative sheet targeted by this application can be developed. By adjusting the oxygen concentration during light irradiation, the desired surface performance can be developed.

Photons excited by the irradiation with the excimer laser are strongly absorbed by the polymer chain of the ionizing radiation curable resin serving as the surface protective layer of the decorative sheet surface, reach a depth of about several tens to hundreds of nm of the ionizing radiation curable resin, and generate polymer radicals. The polymer radicals cause the cleavage and the recombination and re-crosslinking of the polymer chain of the ionizing radiation curable resin. Thus, the molecular weight increases on the surface of the ionizing radiation curable resin, and the free volume (porosity) in the polymer decreases, resulting in the formation of fine irregular shapes connected in a wavy shape like folding creases.

A pitch (pitch between irregularities) I between fine structures of the shrinkage caused by irradiating the ionizing radiation curable resin with the excimer laser can be obtained by the Polanyi's Equation represented by Equation (1) below and the Polanyi's Equation focusing on the 0th-order diffracted light and the first-order diffracted light represented by Equation (2) below.

$$I \cdot \sin\varphi = m\lambda \qquad (1)$$

$$I \cdot \sin[\arctan (x/d)] = \lambda \qquad (2)$$

Herein, in Equation (1), I is the pitch between the fine structures, $\varphi$ is the angle of the diffracted light of the excimer laser, m is an integer of 0 or more, and $\lambda$ is the wavelength of the excimer laser. In Equation (2), x is the distance between the 0th-order diffracted light and the first-order diffracted light on a screen, and d is the distance between the screen on which the diffracted light is projected and the ionizing radiation curable resin as a sample.

By changing an incident angle $\theta$ of the laser irradiating the ionizing radiation curable resin, the pattern of the fine structures of the shrinkage generated in the ionizing radiation curable resin can be controlled. When the incident angle of the excimer laser is close to 0°, the pattern of the fine structures exhibits isotropy with respect to a portion irradiated with the laser, and random fine structures are generated. On the other hand, when the incident angle $\theta$ of the laser becomes larger, the pattern of the fine structures exhibits a large anisotropy with respect to the portion irradiated with the laser. The surface shape of the ionizing radiation curable resin shrunk by the laser with an incident angle of 0° is effective for improving fingerprint resistance, contamination resistance, and flaw resistance, for example. This is because the isotropically lined random fine structures make the attachment of contaminants, flaws, gloss changes, and the like inconspicuous. The interval (pitch) I between the fine structures formed by the irradiation with the laser with an incident angle of 0° is substantially the same as the wavelength $\lambda$ of the excimer laser to be emitted. When the incident angle $\theta$ is changed, the shape of the fine structures remains a vertical stripe pattern and the interval I changes. The interval I is obtained by Equation (3) below based on the incident angle $\theta$ of the laser.

$$I = \lambda/\cos\theta \qquad (3)$$

As the ionizing radiation curable resin constituting the first surface protective layer 13, an ultraviolet curable resin is usable, for example. As the ultraviolet curable resin, (meth)acrylic resin, silicone-based resin, polyester-based resin, urethane-based resin, amide-based resin, and epoxy-based resin are usable, for example. The ultraviolet curable resin may be either a water-based resin or a non-water-based (organic solvent-based) resin.

The first surface protective layer 13 may contain inorganic particles. Examples of the inorganic particles include fine particles formed of inorganic materials, such as silica, glass, alumina, titania, zirconia, calcium carbonate, and barium sulfate. The addition amount of the inorganic particles in the first surface protective layer 13 is more than 0% by mass and 5% by mass or less, preferably more than 0% by mass and less than 3% by mass, more preferably more than 0% by mass and 1% by mass or less, and still more preferably more than 0.1% by mass and 0.5% by mass or less. The first surface protective layer 13 preferably contains the inorganic particles in the addition amount mentioned above because the wear resistance and the flaw resistance are improved. When the first surface protective layer 13 contains the inorganic particles, the flaw resistance is improved as compared with that in a case where the inorganic particles are not contained. However, when the content of the inorganic particles is excessively high, the inorganic particles fall off from the surface of the first surface protective layer 13 or fingerprints are attached, for example, which adversely affects the fingerprint resistance. Therefore, the addition amount of the inorganic particles is preferably set to more than 0% by mass and less than 3% by mass.

The first surface protective layer 13 may be added with one or more additives selected from various additives, such as colorants, matting agents, fillers, UV absorbers, light stabilizers, heat stabilizers, antioxidants, antistatic agents, lubricants, flame retardants, antibacterial agents, antifungal agents, anti-friction agents, and light scattering agents, for example. However, the first surface protective layer 13 does not contain a gloss adjuster reducing the oil repellency and making the attachment of fingerprints easy.

The first surface protective layer 13 may completely cover the colored pattern layer 12, and can develop the function as the surface protective layer over the entire surface of the decorative sheet 1. The density of the first surface protective layer 13 can be adjusted according to the desired gloss or performance.

The thickness of the first surface protective layer 13 is preferably set in the range of 1.0 $\mu$m or more and 50 $\mu$m or less. By setting the thickness of the first surface protective layer 13 within the range above, degradation of the design properties by the protection of the primary film layer 11 and the colored pattern layer 12 can be suppressed. When the thickness of the first surface protective layer 13 is 1.0 $\mu$m or more, the first surface protective layer 13 can sufficiently have functions, such as wear resistance, required as the surface protective layer. When the thickness of the first surface protective layer 13 is 50 $\mu$m or less, there is an effect that the first surface protective layer 13 does not become unnecessarily thick and the production cost does not excessively increase.

Such a decorative sheet 1 has glossiness of 5.0 or less in spite of the fact that the gloss adjuster (matting additive) is not contained, and thus provides a decorative sheet having excessively low glossiness. In a conventional decorative sheet, when the glossiness of the decorative sheet having a surface protective layer is about 8 or less, the content ratio of the gloss adjuster in the surface protective layer is high, so that the surface protective layer becomes cloudy. Therefore, there has been a risk that the hue or the pattern of the colored pattern layer is not clearly developed, or the design properties of the decorative sheet deteriorate. Furthermore, when a decorative sheet having glossiness close to 0 is obtained, the content ratio of the gloss adjuster in the surface protective layer is much higher, and therefore it has been difficult to form a surface protective layer with a smooth surface without generating streaks, irregularities, and the like in the formation of the surface protective layer.

The decorative sheet 1 can provide a decorative sheet having low glossiness of 5.0 or less and preferably 2.0 or less while maintaining the performance comparable to that of a decorative sheet having glossiness of 20 ± 3 or more. Herein, the "glossiness" is a measured value when measured at an incident angle of 60° using a gloss meter, gloss checker. Therefore, the decorative sheet 1 is obtained which has high oil repellency and to which fingerprints are hardly attached while maintaining the performance required as the decorative sheet 1.

(1.2) Method for producing decorative sheet

The colored layer 12A is formed, using a resin film as the primary film layer 11, by printing an ink of a desired hue onto the primary film layer 11. Next, the pattern layer 12B is formed by printing an ink of a desired hue with a desired pattern onto the colored layer 12A.

Subsequently, an ionizing radiation curable resin is applied onto the colored layer 12A on which the pattern layer 12B is formed (colored pattern layer 12). At this time, the application amount of the ionizing radiation curable resin can be adjusted according to desired gloss and performance such a degree that at least the colored pattern layer 12 can be completely covered and is preferably adjusted to 2.0 $g/m^2$ or more and 20 $g/m^2$ or less, for example.

Thereafter, a first ionizing radiation having energy capable of cleaving at least one of a carbonyl bond and a carbon-carbon bond is emitted to the surface of the applied ionizing radiation curable resin to shrink the surface of the ionizing radiation curable resin. The first ionizing radiation may be one type of ionizing radiation having a predetermined wavelength or may be a plurality of types of ionizing radiations having wavelengths different from each other. Examples of the first ionizing radiation include excimer laser having high energy, for example. The medium of the excimer laser may be any conventionally used medium (discharge gas) insofar as it has energy capable of cleaving at least one of the carbonyl bond and the carbon-carbon bond. As the discharge gas, rare gases, such as Xe, Ar, and KrF, or mixed gases of rare gases and halogen gases, such as ArBr, ArF, KrCl, XeI, XeCl, XeBr, KrBr, and KrF, are usable. The excimer laser has different wavelengths (center wavelengths) depending on the medium, and has wavelengths, such as about 172 nm (Xe), about 126 nm (Ar), about 146 nm (Kr), about 165 nm (ArBr), about 193 nm (ArF), about 222 nm (KrCl), about 253 nm (XeI), about 308 nm (XeCl), about 283 nm (XeBr), about 207 nm (KrBr), and about 248 nm (KrF), for example.

The irradiation of the ionizing radiation curable resin with the ionizing radiation having high energy forms the ridge-like irregular shape on the surface of the ionizing radiation curable resin. At this time, by adjusting the resin application amount of the ionizing radiation curable resin and the irradiation time of the ionizing radiation, the shrinkage rate of the ionizing radiation curable resin is adjusted, so that the gloss of the completed decorative sheet 1 is adjusted.

By changing the type of the first ionizing radiation emitted to the ionizing radiation curable resin in the formation of the ridge-like irregular shape, the sense of touch and a visually obtained effect of the surface of the decorative sheet 1 can be changed. For example, the ionizing radiation curable resin is irradiated with the first ionizing radiation with a wavelength of about 250 nm, and then irradiated with the first ionizing radiation with a wavelength of about 172 nm to form the ridge-like irregular shape, and then the ionizing radiation curable resin is cured. This makes it possible to adjust the sense of touch (texture) of the decorative sheet 1. Alternatively, it may be acceptable that the ionizing radiation curable resin is irradiated with the first ionizing radiation with a wavelength of about 172 nm to form the ridge-like irregular shape, and then the ionizing radiation curable resin is cured, for example. This makes it possible to obtain the decorative sheet 1 having a smooth surface and low gloss or the decorative sheet 1 in which a gross matte effect (visually embossed feeling) is obtained on the surface.

Subsequently, a second ionizing radiation curing the ionizing radiation curable resin is emitted to the shrunk ionizing radiation curable resin to cure the ionizing radiation curable resin having the irregular shape on the surface. The second ionizing radiation includes ultraviolet rays with a wavelength of 400 nm or less and the like, for example. The ionizing radiation curing the ionizing radiation curable resin has a broad wavelength range (i.e., broad spectrum) in the range of 400 nm or less.

Thus, the first surface protective layer 13 is formed.

As described above, the decorative sheet 1 is formed which includes the first surface protective layer 13 having the core part 13A and the ridge-like parts 13B provided to project in a ridge-like shape from one surface (upper surface) of the core part 13A.

(1. 3 Modification)

(1. 3. 1 Modification 1)

In the decorative sheet of the first embodiment, the first surface protective layer 13 is formed in a single layer, i.e., formed by irradiating the surface of the single-layer ionizing radiation curable resin with the ionizing radiation, but the present disclosure is not limited thereto.
For example, a decorative sheet 1A may be acceptable in which the first surface protective layer 13 is formed in a multilayer. More specifically, the first surface protective layer 13 may have an irregular shape formed on the surface by depositing two or more of the same ionizing radiation curable resin layers or depositing two or more of different ionizing radiation curable resins. However, it is important that the outermost layer of the first surface protective layer 13 has an irregular shape formed by the shrinkage by the ionizing radiation of a specific wavelength described above.

(1. 3. 2 Modification 2)

In the decorative sheet of the first embodiment, the configuration is described in which the primary film layer 11 is formed of a single-layer resin film, but the present disclosure is not limited to such a configuration.
For example, as illustrated in FIG. 6, a decorative sheet 1B may be acceptable in which a first film layer 11A and a second film layer 11B are provided in place of the single-layer primary film layer 11. The first film layer 11A and the second film layer 11B may be resin films formed of the same resin material or resin films formed of different resin materials. For example, the first film layer 11A may be a polyethylene film and the second film layer 11B may be a polypropylene film. In this case, it is preferable to provide the colored pattern layer 12 on the first film layer 11A, and deposit an adhesive resin layer 14 and the second film layer 11B on the colored pattern layer 12. The first surface protective layer 13 is preferably provided on the second film layer 11B. With a deposited configuration, it can be prevented that the colored pattern layer 12 is exposed, so that the wear resistance, the flaw resistance, the contamination resistance, and the weather resistance deteriorate. When the colored pattern layer 12 is exposed, the weather resistance is particularly likely to deteriorate. Therefore, when the decorative sheet is required to have high weather resistance, it is preferable to use the decorative sheet 1B in which films (first film layer 11A and second film layer 11B) are used as the primary film layer and the colored pattern layer 12 is sandwiched between the films.
The first film layer 11A and the second film layer 11B have a function as the primary film layer in two layers. The total thickness of the first film layer 11A and the second film layer 11B functioning as the primary film layer is preferably within the range of 50 $\mu$m or more and 250 $\mu$m or less and more preferably within the range of 70 $\mu$m or more and 200 $\mu$m or less. When the total thickness of the first film layer 11A and the second film layer 11B is within the ranges above, the lamination suitability can be improved and cracking occurring in a bent portion of the sheet can be reduced.
The film layer functioning as the primary film layer may contain three or more layers.

(1. 3. 3 Modification 3)

In the decorative sheet of the first embodiment, the configuration is described in which the primary film layer 11 is formed of a single-layer paper material, but the present disclosure is not limited to such a configuration.
For example, as illustrated in FIG. 7, a decorative sheet 1C may be acceptable which includes a deposited primary film layer 11' having a first paper material 11C, a moisture-proof resin layer 11D, and a second paper material 11E deposited in order in place of the single-layer primary film layer 11.
The moisture-proof resin layer 11D is formed of a polyethylene resin, for example. In this case, the moisture permeability can be finely adjusted by the type of a resin material constituting the moisture-proof resin layer 11D or the thickness of the moisture-proof resin layer 11D, and an effect of suppressing a warp of the moisture-proof resin layer 11D and the like can be obtained.
The first paper material 11C, the moisture-proof resin layer 11D, and the second paper material 11E have a function as the primary film layer in three layers. The total thickness of the first paper material 11C, the moisture-proof resin layer 11D, and the second paper material 11E functioning as the primary film layer is preferably within the range of 50 $\mu$m or more and 250 $\mu$m or less and more preferably within the range of 70 $\mu$m or more and 200 $\mu$m or less. When the total thickness of the first paper material 11C and the second paper material 11E is within the ranges above, the lamination suitability can be improved and cracking occurring in a bent portion of the sheet can be reduced.
The paper material functioning as the primary film layer may contain three or more layers deposited via a moisture-proof resin layer.

(1. 3. 4 Modification 4)

In the decorative sheet of the first embodiment, the configuration is described in which the first surface protective layer 13 is formed on the upper surface of the colored pattern layer 12, but the present disclosure is not limited to such a configuration.

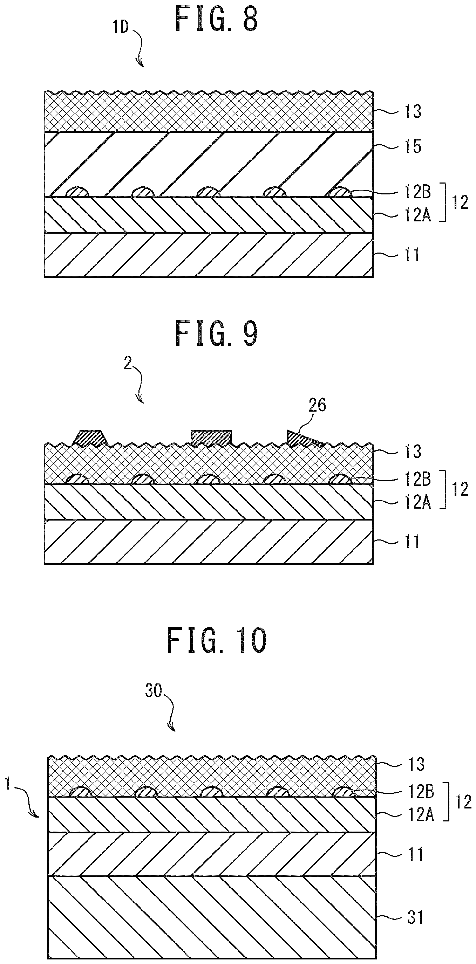

For example, as illustrated in FIG. 8, a decorative sheet 1D may be acceptable in which a transparent layer 15 is provided between the colored pattern layer 12 and the first surface protective layer 13. By providing the transparent layer 15, it can be prevented that the colored pattern layer 12 is exposed, so that the wear resistance, the flaw resistance, the contamination resistance, and the weather resistance deteriorate, as with the decorative sheet 1B of Modification 2.

As a resin material constituting the transparent layer 15, a thermosetting resin may be used, for example, and an acrylic resin, a silicone resin, a polyester resin, a urethane resin, an amide resin, an epoxy resin, or the like may be used. Further, an adhesive resin layer may be provided in a lower layer of the transparent layer 15.

For the primary film layer 11, a polyolefin film, such as a polyethylene film or a polypropylene film, may be used.

<Effects of first embodiment>

The decorative sheet 1 according to this embodiment has the following effects.

(1) The decorative sheet 1 of this embodiment includes the first surface protective layer 13 having the irregular shape formed on the surface.

According to this configuration, the gloss (glossiness) of the first surface protective layer 13 can be adjusted even when the first surface protective layer 13 does not contain the gloss adjuster (matting additive). The gloss adjuster reduces the oil repellency of a layer formed of resin materials, and therefore fingerprints are easily attached. The first surface protective layer 13 does not contain the gloss adjuster, and therefore does not absorb oil, so that the oil repellency is relatively improved. Therefore, fingerprints are hardly attached to the decorative sheet 1 having the first surface protective layer 13 in various situations, such as on-site construction, furniture assembly, and daily life of residents.

(2) The decorative sheet 1 of this embodiment includes the first surface protective layer 13 having the irregular shape formed on the surface.

According to this configuration, the oil repellency of the first surface protective layer 13 is improved, so that oil stains or the adsorption of contaminants to the surface of the decorative sheet 1 can be suppressed.

(3) The decorative sheet 1 of this embodiment includes the first surface protective layer 13 not containing the gloss adjuster.

According to this configuration, when the surface of the decorative sheet 1 is scratched, particles of the gloss adjuster do not fall off, which can make it difficult to cause gloss changes or scratches on the surface of the decorative sheet 1.

(4) The decorative sheet 1 of this embodiment has the first surface protective layer 13 not containing the gloss adjuster.

According to this configuration, the content of additives in the first surface protective layer 13 can be lowered, and therefore the cloudiness of the first surface protective layer 13 can be prevented and the formation of the first surface protective layer 13 is facilitated.

2. Second embodiment

A decorative sheet according to a second embodiment of the present disclosure is described with reference to FIG. 9.

FIG. 9 is a cross-sectional view for explaining one configuration example of a decorative sheet 2 according to the second embodiment of the present disclosure.

The decorative sheet 2 includes a primary film layer 11, a colored pattern layer 12, a first surface protective layer 13, and a second surface protective layer 26. The decorative sheet 2 is constituted by depositing the primary film layer 11, the colored pattern layer 12, the first surface protective layer 13, and the second surface protective layer 26 in this order. More specifically, the decorative sheet 2 is different from the decorative sheet 1 according to the first embodiment in that the second surface protective layer 26 is provided on the upper surface of the first surface protective layer 13.

Hereinafter, the second surface protective layer 26 is described. Note that the layers other than the second surface protective layer 26 (primary film layer 11, colored pattern layer 12, and first surface protective layer 13) have the same configurations as those of the layers of the decorative sheet 1, and therefore a description thereof is omitted.

(2. 1) Basic configuration of decorative sheet

<Second surface protective layer >

The second surface protective layer 26 is provided on a part of the irregular shape formation surface of the first surface protective layer 13. The second surface protective layer 26 is a layer partially formed on the first surface protective layer 13 to generate a gloss difference between the first surface protective layer 13 and the second surface protective layer 26 and express visually embossed feeling by a gross matte effect.

The second surface protective layer 26 is formed of a resin material, such as an ionizing radiation curable resin or a thermosetting resin, and is preferably formed of the ionizing radiation curable resin.

As the ionizing radiation curable resin, the same materials as those of the first surface protective layer 13 are usable.

As the thermosetting resin, it is preferable to use a thermosetting resin having a urethane bond, such as a two-component curable urethane resin, for example, from the viewpoint of the gloss difference between the first surface protective layer 13 and the second surface protective layer 26.

As the two-component curable urethane resin, a urethane resin mainly containing polyol, and isocyanate as a cross-linking agent (curing agent) is usable, for example.

The polyol is one having two or more hydroxyl groups in the molecules, and polyethylene glycol, polypropylene glycol, acrylic polyol, polyester polyol, polyether polyol, polycarbonate polyol, and polyurethane polyol are usable, for example.

As the isocyanate, polyvalent isocyanates having two or more isocyanate groups in the molecules are usable. As the polyvalent isocyanates, aromatic isocyanates, such as 2,4-tolylene diisocyanate, xylene diisocyanate, and 4,4-diphenylmethane diisocyanate, or aliphatic (or alicyclic) isocyanates, such as 1,6-hexamethylene diisocyanate, isophorone diisocyanate, hydrogenated tolylene diisocyanate, and hydrogenated diphenylmethane diisocyanate, are usable, for example. Further, adducts or multimers of the above-described various isocyanates are usable. For example, a tolylene diisocyanate adduct, a tolylene diisocyanate trimer, and the like are mentioned. Among the isocyanates described above, the aliphatic (or alicyclic) isocyanates are preferable in that the weather resistance and the thermal yellowing resistance can be improved, and 1,6-hexamethylene diisocyanate is usable, for example.

The second surface protective layer 26 is partially formed on the first surface protective layer 13, and can adjust the covered area according to the design properties and the desired performance. The second surface protective layer 26 is preferably provided to cover 10% or more and 90% or less of the surface of the first surface protective layer 13. When expressing a gross matte effect (visually embossed feeling), the second surface protective layer 26 is preferably provided to cover 10% or more and 80% or less of the surface of the first surface protective layer 13. When an improvement of the scratch resistance, the contamination resistance, and the oil repellency as the decorative sheet 2 is required, the second surface protective layer 26 is preferably provided to cover 10% or more and 80% or less and more preferably provided to cover 10% or more and 30% or less of the surface of the first surface protective layer 13.

The primary film layer 11, the colored pattern layer 12, and the first surface protective layer 13 of the decorative sheet 2 are formed in the same manner as those of the decorative sheet 1.

The second surface protective layer 26 is formed by applying a resin material to the upper surface of the first surface protective layer 13 by screen printing, offset printing, gravure printing, or the like, for example, and curing the resin material.

Thus, the decorative sheet 2 is formed.

(2. 2) Modification

In the decorative sheet 2, the pattern layer 12B of the colored pattern layer 12 and the gross matte effect (visually embossed feeling) produced by the gloss difference between the first surface protective layer 13 and the second surface protective layer 26 may be synchronized with each other. The decorative sheet 1 in which the pattern layer 12B and the visually embossed feeling are synchronized with each other can produce more excellent visually embossed feeling than that in a case where the gross matte effect is expressed only by the gloss difference between the first surface protective layer 13 and the second surface protective layer 26.

<Effects of second embodiment>

The decorative sheet 2 according to this embodiment has the following effects in addition to the effects described in the first embodiment.

(5) The decorative sheet 2 of this embodiment has the second surface protective layer 26 having relatively high glossiness in a part of the irregular shape formation surface of the low-gloss first surface protective layer 13.

According to this configuration, the decorative sheet 2 having the gross matte effect (visually embossed feeling) can be obtained without causing cloudiness of the first surface protective layer 13 and the second surface protective layer 26.

3. Third embodiment

A decorative plate according to a third embodiment of the present disclosure is described with reference to FIG. 10.

FIG. 10 is cross-sectional view for explaining one configuration example of a decorative plate 30 according to the third embodiment of the present disclosure.

The decorative plate 30 includes the decorative sheet 1 and a substrate 31. The decorative plate 30 is constituted by depositing the substrate 31, the primary film layer 11, the colored pattern layer 12, and the first surface protective layer 13 in this order.

The decorative plate 30 may have the decorative sheet 2 in place of the decorative sheet 1. The decorative plate 30 may have the decorative sheets 1A to 1D, which are the modifications of the decorative sheet 1, in place of the decorative sheet 1.

Hereinafter, the substrate 31 is described. The layers other than the substrate 31 (the layers of the decorative sheet including the primary film layer 11, the colored pattern layer 12, and the first surface protective layer 13) have the same configurations as those of the layers described in the first embodiment and the second embodiment, and therefore a description thereof is omitted.

(3. 1) Basic configuration of decorative sheet

<Substrate>

The substrate 31 may be a woody board, a medium density fiberboard (MDF), a particle board, a metal board, a non-combustible board, a composite board containing a plurality of materials, or the like, or may be a flash substrate or the like, for example. The substrate 31 may be a kneaded material of plywood and MDF.

Further, a primer layer, a concealing layer, or the like may be provided on the surface facing the decorative sheet 1 on the substrate 31.

EXAMPLES

Hereinafter, the decorative sheet according to the present disclosure is described with reference to Examples.

In Examples, a decorative sheet having the configuration described in the first embodiment was produced and subjected to evaluations described later.

<Example 1>

A 55 $\mu$m thick olefin film (manufactured by RIKEN TECHNOS CORP.) was used as a primary film layer, and a urethane ink (manufactured by TOYO INK CO., LTD.) was printed on the entire one surface of the primary film layer to form a colored layer. Next, a pattern was printed on the colored layer using a urethane ink, thereby forming a pattern layer.

Subsequently, a transparent olefin film different from the primary film layer was deposited as a transparent layer on the colored layer on which the pattern layer was formed (colored pattern layer). Subsequently, an ionizing radiation curable resin was applied. As the ionizing radiation curable resin, a (meta)acrylic resin not containing the gloss adjuster was used. The application amount of the ionizing radiation curable resin was set to 12 g/m$^2$ such that the colored pattern layer was completely covered.

Thereafter, the surface of the ionizing radiation curable resin was irradiated with an ionizing radiation (KrF excimer laser) with a wavelength of 250 nm, and then was irradiated with an ionizing radiation (Xe excimer laser) with a wavelength of 172 nm. Thus, the surface of the ionizing radiation curable resin was shrunk, so that an irregular shape was formed on the surface of the ionizing radiation curable resin. At this time, the ionizing radiation was emitted at a line speed of 10 m/min. Subsequently, the ionizing radiation curable resin having the shrunk surface was irradiated with an ionizing radiation having a broad wavelength range (range of 400 nm or less). At this time, two UV lamps of a gallium (Ga) lamp and a mercury (Hg) lamp were used. Thus, the ionizing radiation curable resin having an irregular shape on the surface was cured to form a decorative sheet provided with a first surface protective layer. The formed first surface protective layer had a shape in which the ridge-like parts having a height of 7 $\mu$m were formed on the core part having a thickness of 20 $\mu$m. Finally, the woody board was pasted as a substrate to the back surface of the primary film layer of the decorative sheet.

Thus, a decorative plate of Example 1 was formed.

<Example 2>

A decorative plate of Example 2 was formed in the same manner as in Example 1, except that a paper with a basis weight of 30 g/m² (manufactured by TENTOK PAPER Co., Ltd.) was used as the primary film layer, and a first surface protective layer was directly formed on a pattern resin layer without providing the transparent layer. In the decorative plate of Example 2, an ionizing radiation curable resin was applied in the same amount as that of Example 1 as the first surface protective layer. However, due to the fact that the primary film layer is the paper, a part of the ionizing radiation curable resin soaked into the primary film layer, so that the thickness of the first surface protective layer was slightly smaller than that of the decorative plate of Example 1. Further, the decorative plate of Example 2 was formed by integrally curing the primary film layer and the substrate by the first surface protective layer soaked into the primary film layer.

<Example 3>

A decorative plate of Example 3 was formed in the same manner as in Example 2, except that a paper with a basis weight of 30 g/m² (manufactured by TENTOK PAPER Co., Ltd.) was used as the primary film layer and the application amount of the ionizing radiation curable resin was set to 25 g/m².

<Example 4>

A decorative plate of Example 4 was formed in the same manner as in Example 1, except for using a high chemical resistant/high flaw resistant ionizing radiation curable resin having more excellent chemical resistance and flaw resistance than those of the material used in Example 1 as the ionizing radiation curable resin forming the first surface protective layer.

<Example 5>

A decorative plate of Example 5 was formed in the same manner as in Example 1, except that the thickness of the primary film layer was set to 50 μm, the first surface protective layer was directly formed on the pattern resin layer without providing the transparent layer, and the second surface protective layer was formed of the same material as that of the first surface protective layer on a part of the irregular shape formation surface of the first surface protective layer. The decorative plate of Example 5 became a decorative plate in which the visually embossed feeling by the gross matte effect was expressed by the second surface protective layer on the decorative sheet surface.

<Comparative Example 1>

An acrylic resin (manufactured by DIC Graphics Corporation) containing 15% by mass of the gloss adjuster was used as the ionizing radiation curable resin, the ionizing radiation curable resin was applied onto a colored pattern layer, and then an ionizing radiation having a broad wavelength range (range of 400 nm or less) was emitted to cure the ionizing radiation curable resin without forming an irregular shape, thereby forming a first surface protective layer having a smooth surface, so that a decorative sheet is formed.

Other than the above, a decorative plate of Comparative Example 1 was formed in the same manner as in Example 2.

<Evaluation>

The following evaluations were conducted for each of the decorative plates of Examples and Comparative Example 1.

(A) Design properties: Evaluation of clarity of colored pattern layer

It was visually confirmed from the surface side (decorative sheet side) of the decorative plates of each of Examples and Comparative Example 1 whether the color/pattern of the colored pattern layer was clearly developed. At this time, a case where the colored pattern layer was clearly visible was evaluated as "A" and a case where the colored pattern layer was not clearly visible was evaluated as "C".

(B) Design properties: Evaluation of cloudiness of first surface protective layer

It was visually confirmed from the surface side (decorative sheet side) of the decorative plates of each of Examples and Comparative Example 1 whether the first surface protective layer was cloudy. At this time, a case where the first surface protective layer was not cloudy was evaluated as "A" and a case where the first surface protective layer was cloudy was evaluated as "C".

(C) Fingerprint resistance: Wiping property evaluation

The 60° specular glossiness of the decorative plate surfaces (surface protective layers) of each of Examples and Comparative Example 1 was measured using a gloss meter (Suga Test Instruments Co., Ltd., GS-4K) and defined as the initial glossiness. Subsequently, a fingerprint resistance evaluation liquid was attached onto the surface protective layer, and the specular glossiness of a portion to which the fingerprint resistance evaluation liquid was attached was measured and defined as the glossiness before wiping. Thereafter, the fingerprint resistance evaluation liquid attached to the decorative sheet surface was wiped off, and the specular glossiness of the portion from which the fingerprint resistance evaluation liquid was wiped off was measured, and defined as the glossiness after wiping. Herein, higher fatty acid was used as the fingerprint resistance evaluation liquid.
Subsequently, the evaluation rate after wiping (%) was calculated from Equation (4) below based on the measured initial glossiness, the glossiness before wiping, and the glossiness after wiping.

$$\text{Evaluation rate after wiping (\%)} = (\text{Glossiness after wiping/Initial glossiness}) \times 100 \quad (4)$$

At this time, a case where the evaluation rate (%) after wiping was 70% or more and less than 250% was evaluated as "A", a case where the evaluation rate (%) after wiping was 50% or more and less than 70% or 250% or more and less than 300% was evaluated as "B", and a case where the evaluation rate (%) after wiping was less than 50% or 300% or more was evaluated as "C".

(D) Fingerprint resistance: Sliding angle evaluation

The decorative plate of each of Examples and Comparative Example 1 was placed on a horizontal measurement stage, and a fixed amount of a measuring liquid was left still on the decorative sheet surface of the decorative plate. Next, the measurement stage was tilted at a fixed speed, and the tilt of the measurement stage when droplets began to slide down was measured as the sliding angle. As the measurement liquid, normal hexadecane was used, and the measurement liquid was dropped in a droplet amount of 5 μl onto the decorative sheet surface. At this time, a case where the sliding angle was less than 20° was evaluated as "A", a case where the sliding angle was 20° or more and less than 30° was evaluated as "B", and a case where the sliding angle was 30° or more was evaluated as "C". More specifically, it was evaluated that the lower the sliding angle, the higher the liquid repellency and the less likely the fingerprint remains.

(E) Contamination resistance: Oil repellency evaluation

Hand oil was attached to the decorative sheet side surface of the decorative plate of each of Examples and Comparative Example 1, the hand oil was wiped off with a cloth, and then the condition of the decorative sheet surface after wiping was visually confirmed. At this time, a case where the hand oil on the decorative sheet surface was able to be easily wiped off was evaluated as "A" and a case where the hand oil on the decorative sheet surface was not able to be wiped off and an oil stain remained was evaluated as "C".

(F) Contamination resistance: Evaluation of contamination resistance by ink

On the decorative sheet surface of the decorative plate of each of Examples and Comparative Example 1, 10 mm wide lines were drawn with a blue ink, a fast-drying black ink, and a red crayon according to Contamination A test specified in the Japanese Agricultural Standards (JAS) for plywood, the decorative plate was allowed to stand for 4 hours, the lines drawn with the blue ink, the fast-drying black ink, and the red crayon were wiped off with a cloth soaked with ethanol, and then ink contamination resistance by ink was evaluated.
At this time, a case where the lines of the colors were able to be easily wiped off was evaluated as "A", a case where the lines of the colors were able to be partially wiped off but dirt partially remained was evaluated as "B", and the lines of the colors were not able to be wiped off was evaluated as "C".

(G) Flaw resistance/Scratch resistance test: Hoffman scratch test (gloss change)

The decorative sheet surface of the decorative plate of each of Examples and Comparative Example 1 was subjected to a scratch test using a Hoffman Scratch Hardness Tester (manufactured by GARDCO), and the gloss change of the decorative sheet surface was confirmed. In the scratch test, the heaviest load causing no gloss change on the decorative sheet surface was measured. After the test, a portion where the gloss change occurred on the surface was confirmed.

At this time, a case where no gloss change occurred on the surface with a load of 200 g was evaluated as "A", a case where the gloss change occurred with a load of 125 g or more and less than 200 g was evaluated as "B", and a case where the gloss change occurred with a load of less than 125 g was evaluated as "C".

(H) Flaw resistance/Scratch resistance test: Hoffman scratch test (tear)

The decorative sheet surface of the decorative plate of each of Examples and Comparative Example 1 was subjected to a scratch test using a Hoffman Scratch Hardness Tester (manufactured by GARDCO), and a tear of the decorative sheet surface was confirmed. In the scratch test, the heaviest load causing no tear damage or the like on the decorative sheet surface was measured. After the test, a portion suffering the gloss change, the tear damage, and the like on the surface was confirmed.

At this time, a case where no tear damage was generated on the surface with a load of 400 g was evaluated as "A", a case where the tear damage was generated with a load of 200 g or more and less than 400 g was evaluated as "B", and a case where the tear damage was generated with a load of less than 200 g was evaluated as "C".

(I) Flaw resistance/scratch resistance test: Pencil hardness test

The decorative sheet surface of the decorative plate of each of Examples and Comparative Example 1 was measured for the hardness of the hardest pencil (pencil hardness) causing no flaw marks on the decorative sheet surface by a pencil hardness test. The scratch hardness test was conducted according to Former JIS K 5400.

At this time, a case where the pencil hardness was harder than H was evaluated as "A" and a case where the pencil hardness was softer than F was evaluated as "B".

(J) Flaw resistance/Scratch resistance test: Coin scratch test

The decorative sheet surface of the decorative plate of each of Examples and Comparative Example 1 was measured for the maximum load causing no continuous flaw mark by applying a 10-yen coin to the decorative sheet surface, and then scratching the surface at a fixed speed according to a coin scratch test. In the coin scratch test, the test was started with a load of 500 g, and then the test was conducted by gradually increasing the load to 1 Kg and 2 Kg.

At this time, a case where the maximum load causing no continuous flaw mark on the surface was 1 kg or more was evaluated as "A", a case where the maximum load was 500 g or more and less than 1 kg was evaluated as "B", and a case where the maximum load was less than 500 g was evaluated as "C".

(K) Flaw resistance/Scratch resistance test: Steel wool rubbing test

The decorative sheet surface of the decorative plate of each of Examples and Comparative Example 1 was rubbed back and forth 20 times with steel wool applied with a load of 500 g, and flaws or gloss changes occurring on the decorative sheet surface were visually confirmed.

At this time, a case where no flaws or gloss changes occurred on the surface was evaluated as "A", a case where slight flaws or gloss changes occurred on the surface was evaluated as "B", and a case where significant flaws or gloss changes occurred on the surface was evaluated as "C".

(L) Printability: Evaluation of printability of first surface protective layer

Streaks or unevenness occurring during the formation of the first surface protective layer of the decorative plate of each of Examples and Comparative Example 1 was visually confirmed.

At this time, a case where no streaks or unevenness occurred on the first surface protective layer was evaluated as "A" and a case where streaks or unevenness occurred on the first surface protective layer was evaluated as "B".

Table 1 below shows extracts and evaluation results of the configuration of each of Examples and Comparative Example 1. In each evaluation, "A" is the most preferable evaluation.

[Table 1]

| | | | Ex. 1 | Ex. 2 | Ex. 3 | Ex. 4 | Ex. 5 | Comp. Ex. 1 |
|---|---|---|---|---|---|---|---|---|
| Configuration | Primary film layer | Material | Olefin film | Paper | Paper | Olefin film | Olefin film | Paper |
| | | Thickness [μm] | 55 | - | - | 55 | 50 | - |
| | | Basis weight [g/m²] | - | 30 | 30 | - | - | 30 |
| | Colored pattern layer | Ink material | Urethane ink | Urethane ink | Urethane ink | Urethane ink | Urethane ink | Urethane ink |
| | Transparent layer | | Provided | None | None | Provided | None | None |
| | First surface protective layer | Material | Ionizing radiation curable resin | Ionizing radiation curable resin | Ionizing radiation curable resin | High chemical resistant/High flaw resistant ionizing radiation curable resin | Ionizing radiation curable resin | Ionizing radiation curable resin |
| | | Application amount [g/m²] | 12 | 12 | 25 | 12 | 12 | 12 |
| | | Surface irregular shape | Provided | Provided | Provided | Provided | Provided | None |
| | Second surface protective layer | | None | None | None | None | Provided | None |
| Design properties | (A) Clarity of colored pattern layer | | A | A | A | A | A | C |
| | (B) Cloudiness of first surface protective layer | | A | A | A | A | A | C |

| | | Ex. 1 | Ex. 2 | Ex. 3 | Ex. 4 | Ex. 5 | Comp. Ex. 1 |
|---|---|---|---|---|---|---|---|
| Contamination resistance | (C) Wiping property | B | A | A | B | B | C |
| | (D) Evaluation of sliding angle | A | A | A | A | B | C |
| | (E) Oil repellency | A | A | A | A | A | C |
| | (F) Fast-drying black ink | A | A | A | A | A | B |
| | (F) Red crayon | A | A | A | A | A | C |
| | (F) Blue ink | A | A | A | A | A | C |
| Flaw resistance/ Scratch resistance | (G) Hoffman scratch test (Gloss change) | A | A | A | A | A | C |
| | (H) Hoffman scratch test (Tear) | A | A | A | A | A | B |
| | (I) Pencil hardness test | B | A | A | A | A | B |
| | (J) Coin scratch test | A | B | A | A | A | C |
| | (K) Steel wool rubbing test | A | B | A | A | B | C |
| | | | | | | | |
| Printability | (L) Printability | A | A | A | A | A | B |

EP 4 094 934 A1

As shown in Table 1, in the decorative sheet of Example 1 in which irregularities formed by shrinking the ionizing radiation curable resin by the irradiation with the ionizing radiation of a predetermined wavelength were formed on the surface of the first surface protective layer not containing the gloss adjuster and formed of the ionizing radiation curable resin, had the most preferable evaluation results in all the evaluations.

On the other hand, in the decorative sheet of Comparative Example 1 having no irregularities on the surface of the first surface protective layer containing the gloss adjuster and formed of the ionizing radiation curable resin, the color/pattern of the colored pattern layer was not clearly developed on the decorative sheet surface, and cloudiness of the first surface protective layer was also observed.

Further, in the decorative sheet of Comparative Example 1, the lines with the inks and the crayon of the colors on the decorative sheet surface were not able to be easily wiped off. Further, the hardness of the first surface protective layer was comparatively low, and flaws or gloss changes occurred, and, in addition thereto, streaks or unevenness occurred in the first surface protective layer.

It was confirmed from the evaluation results above that the decorative sheet in which irregularities formed by shrinking the ionizing radiation curable resin by the irradiation with the ionizing radiation of a predetermined wavelength were formed on the surface of the first surface protective layer not containing the gloss adjuster and formed of the ionizing radiation curable resin has fingerprint resistance higher than that of the decorative sheet not having such a first surface protective layer. It was also confirmed that the above-described decorative sheet has high performance in all of the design properties, the contamination resistance, the flaw resistance/scratch resistance, and the printability in addition to the fingerprint resistance.

The scope of the present disclosure is not limited to the illustrated and described exemplary embodiments, but all embodiments having effects equivalent to those targeted by the present disclosure are also included. Further, the scope of the present disclosure is not limited to combinations of features of the invention defined by each claim and can be defined by any desired combination of specific features among all disclosed features.

Reference Signs List

| 1, 1A, 1B, 1C, 1D, 2 | decorative sheet |
| 11 | primary film layer |
| 11' | deposited primary film layer |
| 11A | first film layer |
| 11B | second film layer |
| 11C | first paper material |
| 11D | moisture-proof resin layer |
| 11E | second paper material |
| 12 | colored pattern layer |
| 12A | colored layer |
| 12B | pattern layer |
| 13 | first surface protective layer |
| 13A | core part |
| 13B | ridge-like part |
| 14 | adhesive resin layer |
| 15 | transparent layer |
| 26 | second surface protective layer |
| 30 | decorative plate |
| 31 | substrate |

Claims

1. A decorative sheet comprising:

   a primary film layer;
   a colored pattern layer provided on one surface of the primary film layer; and
   a first surface protective layer provided on a surface on a side opposite to the primary film layer of the colored pattern layer, having a core part and ridge-like parts provided to project in a ridge-like shape from one surface of the core part, and having an irregular shape formed on a surface.

**2.** The decorative sheet according to claim 1, wherein the ridge-like parts have a composition different from a composition of the core part.

**3.** The decorative sheet according to claim 1 or 2, wherein

the ridge-like parts and the core part are integrally formed of a resin material, and
the ridge-like parts have a composition in which ratios of a carbonyl bond and a carbon-carbon bond contained in the resin material are lower than the ratios of the core part.

**4.** The decorative sheet according to claim 3, wherein the ridge-like parts have a composition in which the ratios of the carbonyl bond and the carbon-carbon bond contained in the resin material are 10% or more lower than the ratios of the core part.

**5.** The decorative sheet according to any one of claims 1 to 4, wherein the ridge-like parts have a crosslinking density higher than a crosslinking density of the core part.

**6.** The decorative sheet according to any one of claims 1 to 5, wherein a surface of the ridge-like parts have a curved shape in a cross-sectional view.

**7.** The decorative sheet according to any one of claims 1 to 6, wherein the first surface protective layer is formed of an ionizing radiation curable resin.

**8.** The decorative sheet according to claim 7, wherein the ionizing radiation curable resin is a (meta)acrylic resin.

**9.** The decorative sheet according to any one of claims 1 to 8, wherein
the first surface protective layer does not contain inorganic particles.

**10.** The decorative sheet according to any one of claims 1 to 8, wherein

the first surface protective layer contains inorganic particles, and
an addition amount of the inorganic particles in the first surface protective layer is more than 0% by mass and less than 3% by mass.

**11.** The decorative sheet according to any one of claims 1 to 10, comprising:
a second surface protective layer provided on a part of a surface on which the irregular shape is formed of the first surface protective layer.

**12.** The decorative sheet according to claim 11, wherein the second surface protective layer is provided to cover 10% or more and 80% or less of the surface of the first surface protective layer.

**13.** The decorative sheet according to any one of claims 1 to 12, wherein

the first surface protective layer does not contain a gloss adjuster, and
glossiness of the first surface protective layer is 5.0 or less.

**14.** A decorative plate comprising:

the decorative sheet according to any one of claims 1 to 13; and
a substrate provided on a surface on a side opposite to the colored pattern layer of the primary film layer.

**15.** A method for producing a decorative sheet comprising:

irradiating a surface of an applied ionizing radiation curable resin with a first ionizing radiation having energy capable of cleaving a polymer chain of the ionizing radiation curable resin, to shrink the surface of the ionizing radiation curable resin, and form an irregular shape on the surface of the ionizing radiation curable resin; and
irradiating the shrunk ionizing radiation curable resin with a second ionizing radiation curing the ionizing radiation curable resin, to cure the ionizing radiation curable resin, and form a first surface protective layer having a core part and ridge-like parts provided to project in a ridge-like shape from one surface of the core part.

16. The method for producing a decorative sheet according to claim 15, wherein first excimer laser and second excimer laser are emitted in order as the first ionizing radiation.

17. The method for producing a decorative sheet according to claim 15 or 16, wherein the second excimer laser has a wavelength shorter than a wavelength of the first excimer laser.

18. The method for producing a decorative sheet according to any one of claims 15 to 17, wherein

the first excimer laser is KrF excimer laser with a wavelength of 250 nm, and
the second excimer laser is Xe excimer laser with a wavelength of 172 nm.

# FIG. 1

# FIG. 2

MAGNIFICATION : ×300.0    100.00μm

# FIG. 3

MAGNIFICATION : ×1000.0

100.00μm

# FIG. 4

# FIG. 5

# FIG. 6

# FIG. 7

# FIG. 8

1D

13
15
12B ⎫
12A ⎬ 12
11

# FIG. 9

2

26
13
12B ⎫
12A ⎬ 12
11

# FIG. 10

30

1
13
12B ⎫
12A ⎬ 12
11
31

## INTERNATIONAL SEARCH REPORT

| International application No. |
|---|
| PCT/JP2021/000124 |

| A.   CLASSIFICATION OF SUBJECT MATTER |
|---|
| B32B 3/30(2006.01)i; B32B 27/00(2006.01)i; B32B 33/00(2006.01)i; E04F 13/08(2006.01)i<br>FI: B32B3/30; B32B27/00 E; B32B33/00; E04F13/08 A; E04F13/08 E<br>According to International Patent Classification (IPC) or to both national classification and IPC |

| B.   FIELDS SEARCHED |
|---|

| Minimum documentation searched (classification system followed by classification symbols) |
|---|
| B32B3/30; B32B27/00; B32B33/00; E04F13/08 |

| Documentation searched other than minimum documentation to the extent that such documents are included in the fields searched |  |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
|  |

| C.   DOCUMENTS CONSIDERED TO BE RELEVANT |
|---|

| Category* | Citation of document, with indication, where appropriate, of the relevant passages | Relevant to claim No. |
|---|---|---|
| X | US 2013/0129980 A1 (MEINHARD, Deiter) 23 May 2013 (2013-05-23) claim 1, paragraphs [0015]-[0018], [0025], [0029], [0041], fig. 1 | 1-8, 10-15 |
| X | BAUER, Frank et al., "UV curing and matting of acrylate nanocomposite coatings by 172nm excimer irradiation", Part 2, Progress in Organic Coatings, November 2010, vol. 69, issue 3, pp. 287-293, https://doi.org/10.016/j.porgcoat.2010.07.001 in particular, chapters 2.1-3.3 | 1-8, 10-15 |
| X | JP 6-312495 A (IWASAKI ELECTRIC CO., LTD.) 08 November 1994 (1994-11-08) abstract, paragraph [0014] | 1-15 |

| ☒ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 March 2021 (01.03.2021) | 16 March 2021 (16.03.2021) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2021/000124 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2003-340986 A (MITSUBISHI RAYON CO., LTD.) 02 December 2003 (2003-12-02) abstract, paragraph [0082] | 1, 6, 9-14 |
| A | EP 2857221 A1 (FLOORING TECHNOLOGIES LTD.) 08 April 2015 (2015-04-08) entire text | 1-18 |
| A | DE 102008024149 A1 (INSTITUT FUER OBERFLAECHENMODIFIZIERUNG E. V.) 03 December 2009 (2009-12-03) entire text | 1-18 |
| A | JP 2006-289897 A (DAINIPPON PRINTING CO., LTD.) 26 October 2006 (2006-10-26) entire text | 1-18 |
| A | JP 2002-275205 A (KAWAMURA INSTITUTE OF CHEMICAL RESEARCH) 25 September 2002 (2002-09-25) entire text | 1-18 |
| A | JP 58-146469 A (UNION CARBIDE CORPORATION) 01 September 1983 (1983-09-01) entire text | 1-18 |
| A | WO 2013/145497 A1 (ORIGIN ELECTRIC CO., LTD.) 03 October 2013 (2013-10-03) entire text | 1-18 |

Form PCT/ISA/210 (continuation of second sheet) (January 2015)

**INTERNATIONAL SEARCH REPORT**
Information on patent family members

International application No.

PCT/JP2021/000124

| Patent Documents referred in the Report | Publication Date | Patent Family | Publication Date |
|---|---|---|---|
| US 2013/0129980 A1 | 23 May 2013 | WO 2012/013364 A1<br>EP 2598561 A1<br>TW 201211177 A<br>AU 2011285153 A<br>CA 2806968 A<br>CN 102985469 A<br>MX 2013001052 A<br>ZA 201300728 B<br>BR 112013001922 A | |
| JP 6-312495 A | 08 Nov. 1994 | (Family: none) | |
| JP 2003-340986 A | 02 Dec. 2003 | (Family: none) | |
| EP 2857221 A1 | 08 Apr. 2015 | (Family: none) | |
| DE 102008024149 A1 | 03 Dec. 2009 | (Family: none) | |
| JP 2006-289897 A | 26 Oct. 2006 | (Family: none) | |
| JP 2002-275205 A | 25 Sep. 2002 | (Family: none) | |
| JP 58-146469 A | 01 Sep. 1983 | US 4421784 A<br>EP 86474 A1<br>NO 162748 B<br>ES 519670 A<br>CA 1210734 A<br>DK 60883 A<br>ZA 8300353 A<br>AU 1137483 A | |
| WO 2013/145497 A1 | 03 Oct. 2013 | (Family: none) | |

Form PCT/ISA/210 (patent family annex) (January 2015)

28

**EP 4 094 934 A1**

**REFERENCES CITED IN THE DESCRIPTION**

**Patent documents cited in the description**

- JP 2001129959 A